Europäisches Patentamt

European Patent Office

Office européen des brevets

(11) Publication number: **0 065 586**
A1

# EUROPEAN PATENT APPLICATION

(21) Application number: 81104023.7

(51) Int. Cl.³: **A 23 F 5/14**

(22) Date of filing: 26.05.81

(43) Date of publication of application:
01.12.82 Bulletin 82/48

(84) Designated Contracting States:
AT BE CH FR GB LI NL SE

(71) Applicant: A. Nattermann & Cie. GmbH
Nattermannallee 1
D-5000 Köln 30(DE)

(72) Inventor: Ghyczy, Miklos, Dr.
Am Serviesberg 12
D-5000 Köln 41(DE)

(72) Inventor: Etschenberg, Eugen, Dr.
Virchowstrasse 20
D-5000 Köln 41(DE)

(72) Inventor: Materne, Carsten, Dr.
H.-Böckler-Strasse 31
D-5300 Bonn 2(DE)

(72) Inventor: Ritzmann, Götz, Dr.
Marienstrasse 104
D-5000 Köln 71(DE)

(74) Representative: Redies, Bernd, Dr. rer. nat. et al,
Redies, Redies, Türk & Gille, Patentanwälte
Brucknerstrasse 20
D-4000 Düsseldorf 13(DE)

(54) Process for preserving the flavour of coffee beans.

(57) Roasted coffee beans protected against premature loss of flavour by the uniform spraying of a solution or emulsion of a phosphatide on the surface of the roasted beans in a small well defined amount.

EP 0 065 586 A1

Croydon Printing Company Ltd.

-1-

It is known that baked coffee beans emanate a strong
flavour. It is generally desired that this flavour is
preversed as much as possible until the beans are ground
and/the coffee drink is prepared. It is therefor preferred to store and transport baked coffee beans in air-
tight containers. The loss of flavour nevertheless is a
problem with baked coffee beans during the transport from
the baker to the user because the used containers quite
often not sufficiently tight or a completely air-tight
closure needs too much work and is too expensive. The
coating of the beans with usual coatings impermeable to
flavours is not possible since such coatings are not
unobjectionable in the following use of the coffee beans
by grinding and extraction with hot water.

It now has surprisingly been found that a premature loss of
coffee flavour may effectively be avoided by coating the
baked coffee beans with a phosphatide in a low amount
based upon the weight of the baked coffee beans. With this
coating the known coffee flavour disappears almost completely and remains suppressed for a prolonged period
of time while there is no disadvantageous influence to
the taste and other desired properties of the coffee
drink prepared from coffee beans so treated.

Thus, the present invention is directed to a process to
protect coffee beans against premature loss of flavour

-2-

wherein a solution or emulsion of a phosphatide is uniformly sprayed upon the surface of the baked coffee beans in such an amount that after drying of the sprayed beans/are coated with the phosphatide in an amount of 0.5 to 1.5 % by weight based upon the weight of the baked coffee beans for spraying.

There may be used as phosphatide both naturally occuring and synthetic phospholipides. Useful naturally occuring phospholipides (of vegetable or animal origin) are in particular phosphatidylcholine, phosphatidylethanolamine, phosphatidylinosite, phosphatidylserine, kephaline, lysolecithine, phosphatidylglycerol, for instance from soybeans or eggs, as well as mixtures of several such phospholipides. Synthetic phosphatides are for instance ditetradecanoylphosphatidylcholine, dihexadecanoyl-phosphatidylcholine, dioleylphosphatidylcholine or dilinoylphosphatidylcholine and in particular di-palmitoylphosphatidylcholine. Most preferably used is a phosphatide fraction which is free of oil and which contains at least 70 % of phosphatidylcholine, for instance the phosphatidylcholine tradeproducts such as Phospholipon R 100 (95 % natural phosphatidylcholine from soybeans), Phospholipon R 100 H (98 % fully hydrogenated phosphatidylcholine from soybeans) or Phospholipon R 80 (phospholipides from soybeans containing

- 3 -

75 % of phosphatidylcholine and 12 % of phosphatidylethanolamine).

The present process is preferably carried out in that the
purified phosphatide fraction free of oil is converted
to an aqueous emulsion containing 5 to 10 % by weight
of the phosphatide. This emulsion is sprayed after
baking of the coffee beans upon the hot beans having a
temperature of above $200^{\circ}C$. in an amount of 5 to 15 g.,
preferably 10 to 12.5 g. of phosphatide per 1 kilogramm
of baked coffee beans. The water of the phosphatide
emulsion evaporates momentarily and the phosphatide covers
the baked coffee beans as a uniform coating. After cooling,
a coffee bean product is obtained which emanates only a
low flavour. Only after several hours there may be observed coffee flavour to a somewhat increased but still
very weak degree.

The resulting coffee beans may be ground and converted to
coffee drink in usual manners directly without any further
treatment.

EXAMPLE 1

3 kg. of raw coffee beans are heated to a temperature of
$220^{\circ}C$. in manners known per se in a usual baking oven.
After reaching this temperature there is sprayed upon the
beans a 6.23 % aqueous emulsion of a phosphatide fraction
which is free of oil and contains at least 70 % of

- 4 -

phosphatidylcholine in the dry product (trade product Phospholipon R 100). The emulsion is sprayed to the beans in such an amount that after evaporation of the water the baked coffee beans are covered with a uniform phosphatide layer in an amount corresponding to 12 g. of the phosphatide per kilogramm of untreated baked coffee beans.

EXAMPLE 2

An emulsion of lecithine which is a trade product and may be dispersed in water is sprayed upon baked coffee beans as described in example 1 in such an amount and with such a concentration that after evaporation of the water the baked coffee beans are covered with 10 g. of the phosphatide per kilogramm of baked coffee beans before spraying.

CLAIMS:

1. Process to protect baked coffee beans against premature loss of flavour wherein a solution or emulsion of a phosphatide is sprayed upon the baked coffee beans in such an amount that after drying of the sprayed beans they are uniformly covered with 0.5 to 1.5 % by weight of phosphatide, calculated to the weight of the baked coffee beans before being sprayed.

2. Process according to claim 1 characterized in that a phosphatide fraction free of oil at least 70 % of which is phosphatidylcholine is used as phosphatide.

0065586

European Patent Office

Application number

EP 81 10 4023

# EUROPEAN SEARCH REPORT

## DOCUMENTS CONSIDERED TO BE RELEVANT

| Category | Citation of document with indication, where appropriate, of relevant passages | Relevant to claim |
|---|---|---|
| X | <u>US - A - 2 309 884</u> (H. BRESNICK)<br>* Claims 1,2; page 1, column 1, line 17; page 1, column 1, lines 32-54 * | 1 |
| A | <u>US - A - 2 278 473</u> (A. MUSHER)<br>* Column 5, lines 33-60 * | 1 |
| A | <u>DE - A - 1 492 652</u> (LECIFRUIT) | |
| A | <u>GB - A - 1 176 586</u> (CHOCO-NEUF)<br>* Claim 1; page 2, lines 9-11 * | 2 |
| A | <u>US - A - 2 564 332</u> (J. KELLOG) | |
| A | <u>FR - A - 650 938</u> (G. WISNER) | |
| A | <u>GB - A - 354 771</u> (H. MUCH) | |
| A | <u>FR - A - 1 588 863</u> (A. NATTERMAN)<br>* Claim 1 * | 2 |

### CLASSIFICATION OF THE APPLICATION (Int. Cl. 3)

A 23 F 5/14

### TECHNICAL FIELDS SEARCHED (Int.Cl. 3)

A 23 F 5/14
        5/12
        5/10
        5/20
A 23 J 7/02
        7/00

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 20-01-1982 | DESMEDT |

EPO Form 1503.1  06.78